# FASCICULE DE BREVET EUROPEEN

(11) **EP 2 486 395 B1**
(45) Date de publication et mention de la délivrance du brevet: **29.05.2013**
(21) Numéro de dépôt: 10760690.7
(22) Date de dépôt: 04.10.2010
(51) Int. Cl.: G01N 21/88, G01N 21/952

(54) **METHODE ET DISPOSITIF D'INSPECTION AUTOMATIQUE D'UNE BOBINE DE CABLE**
VERFAHREN UND VORRICHTUNG ZUR AUTOMATISCHEN ÜBERPRÜFUNG EINER KABELSPULE
METHOD AND DEVICE FOR THE AUTOMATIC INSPECTION OF A CABLE SPOOL

(30) Priorité: 06.10.2009 FR 0956947
(43) Date de publication de la demande: 15.08.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: CALVET, Marc, F-63000 Clermont-Ferrand (FR); ZANELLA, Jean-Paul, F-63000 Clermont-Ferrand (FR); VERNIER, Davy, F-63110 Beaumont (FR)
(74) Mandataire: Reynaud, Georges
(86) Numéro de dépôt international: PCT/EP2010/064737
(87) Numéro de publication internationale: WO 2011/042386

(56) Documents cités:
- FR-A1- 2 925 198
- US-A1- 2001 037 694

## Description

L'invention concerne le domaine de la fabrication des câbles de renfort destinés principalement à l'industrie du pneumatique.

Ces câbles, de nature textile ou métallique, entrent usuellement dans la fabrication des pneumatiques sous forme de nappes contenant des fils parallèles entre eux et formant un angle par rapport à la direction circonférentielle, ou de tronçons de câbles, déposés directement sur l'ébauche de pneumatique en cour de réalisation. Les câbles sont obtenus par la combinaison de fils unitaires qui sont assemblés entre eux par couches successives et retordus de manière à conférer au câble final les propriétés de résistance mécanique et d'élasticité recherchées.

L'invention s'intéresse aux câbles, essentiellement aux câbles métalliques, dans lesquels un mélange de caoutchouc est introduit entre les couches de fils, de manière à conférer au câble des propriétés supplémentaires de résistance à l'usure et à la corrosion. Les câbles sont obtenus par la combinaison de moyens d'assemblage et d'engommage, de sorte que le mélange de caoutchouc est emprisonné au coeur de la structure du câble.

Un procédé de ce type est décrit à titre d'exemple dans la publication WO 2005/071157.

Toutefois, il s'avère que, lors de la mise en oeuvre de ce procédé, des éléments de gomme subsistent à la surface des câbles. Ces débordements présents à la surface des câbles constituent des agrégats non désirés en raison des perturbations qu'ils introduisent dans les processus de mise en oeuvre des câbles disposés en aval. En outre, ils constituent des surépaisseurs localisées de mélange au dos des câbles de renforts, et rendent plus difficile la maîtrise des épaisseurs de gomme déposées sur ces câbles pendant les opérations de calandrage.

La publication WO 2009/083213 décrit à titre d'exemple un procédé amélioré permettant de réduire les débordements en question dans un câble de type 3+N. Dans des domaines technologiques plus éloignés, la publication FR 2925198 décrit un procédé et un dispositif de contrôle de la proportion d'hydrures présents dans un alliage métallique tel que l'alliage utilisé pour le gainage des combustibles nucléaires et comprenant des moyens de traitement d'image, mais dont la construction n'est pas adaptée pour résoudre le problème posé. De même la publication US2001/0037694 décrit un moyen de contrôle de l'épaisseur des parois des stents utilisés dans les applications médicales faisant lui aussi appel à des moyens de traitement d'image pour sélectionner les zones de mesure.

L'invention a pour objet un procédé de contrôle permettant de s'assurer, par un moyen d'inspection automatique, que les câbles produits sont conformes aux spécifications.

L'inspection des câbles se fait au niveau de la bobine sur laquelle le câble est enroulé, en sortie du procédé d'engommage et de retordage.

Le procédé selon la revendication 1 résout le problème posé.

De cette manière, on obtient en temps légèrement différé une appréciation de la qualité fabriquée permettant aux opérateurs de régler les paramètres du procédé de gommage et de retordage, en s'affranchissant des variations d'évaluation liées aux fluctuations de l'attention des opérateurs effectuant un contrôle visuel.

A l'aide d'une grille de classement il est également possible, une fois la bobine remplie, d'affecter une valeur d'évaluation globale à la bobine de câble, et d'orienter ladite bobine vers un des circuits du processus de fabrication.

La description qui suit s'appuie sur les figures 1 à 10 dans lesquelles :
- la figure 1 représente une vue schématique du dispositif d'évaluation,
- la figure 2 représente l'image brute de la surface développée d'une couche de fils,
- les figures 3 et 4 représentent les images obtenues au cours de l'étape de mise à plat,
- la figure 5 représente l'image obtenue après l'étape de segmentation,
- les figures 6, 7, 8, 9 et 10 représentent les images obtenues au cours des différentes étapes de traitement morphologique.

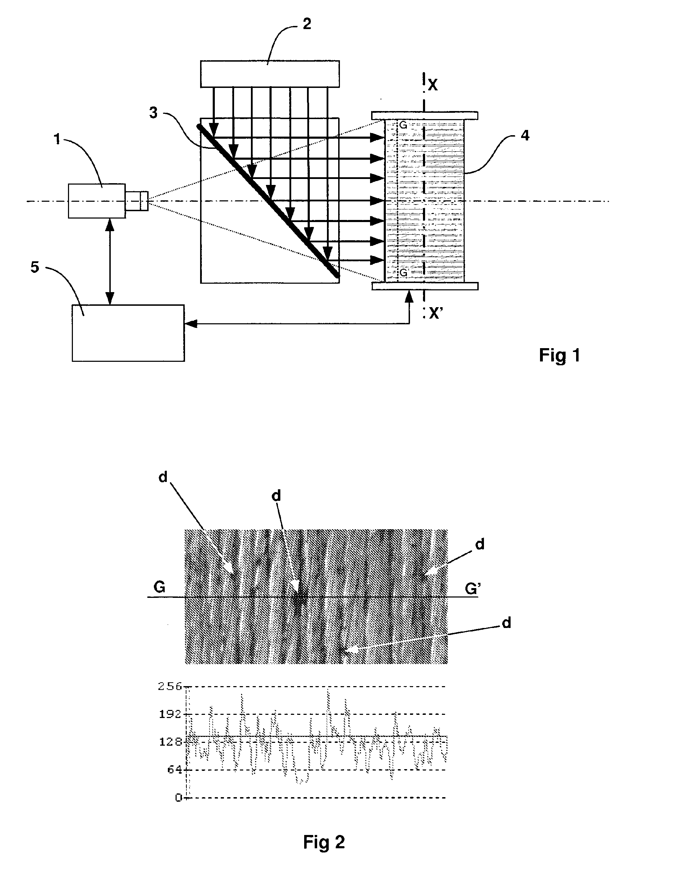

La figure 1 représente le dispositif d'acquisition et de traitement de l'image.

Une caméra linéaire 1 fait l'acquisition de l'image d'une génératrice GG' du cylindre formé par la couche de câble comprenant l'ensemble des spires enroulées autour du moyeu XX' de la bobine 4 en sortie du processus de gommage et de retordage (non visualisé).

Un moyen d'éclairage de type coaxial émet une lumière collimatée en direction d'une lame semi réfléchissante 3. Une rampe de diodes électroluminescentes peut utilement être utilisée comme moyen d'éclairage. La lame réfléchissante 3 dirige la lumière en direction de la bobine de fils 4.

Le dispositif comprend en outre un moyen de traitement numérique 5 de l'image numérique issue de la caméra 1. La puissance de ce moyen de traitement est adaptée pour pouvoir effectuer les transformations numériques de l'image telles que décrites dans les paragraphes qui suivent.

La description qui suit détaille l'ensemble des étapes réalisées pour détecter et évaluer la taille et le nombre des débordements présents sur une couche de spire.

L'addition des images linéaires issues de la caméra 1 sur un tour de bobine, donne une image numérique représentant la surface développée d'une couche de spires, telle qu'illustrée par la figure 2.

Le diagramme représente le niveau de gris enregistré par la caméra le long d'une génératrice GG', l'axe des abscisses représentant la génératrice GG' et l'axe des ordonnées représentant le niveau de gris (la valeur 0 étant attribuée à la couleur noire).

Les flèches permettent de localiser les débordements d indésirables observés visuellement sur le produit par un opérateur. Ces débordements se distinguent en général des ombres portées sur les fils, en ce que les ombres ont une forme généralement allongée, alors que lesdits débordements ont une forme sans élongation prononcée selon une direction préférentielle.

Le procédé de traitement d'image a pour objet de distinguer les débordements parmi les autres taches sombres visibles sur l'image et constituées par les zones d'ombres situées préférentiellement entre les fils.

La première étape du procédé selon l'invention, dite étape de mise à plat, consiste à rendre l'image indépendante du niveau de lumière de la source d'éclairage, et des surbrillances. Cette opération est similaire à l'utilisation d'un filtre analogique de type passe bas

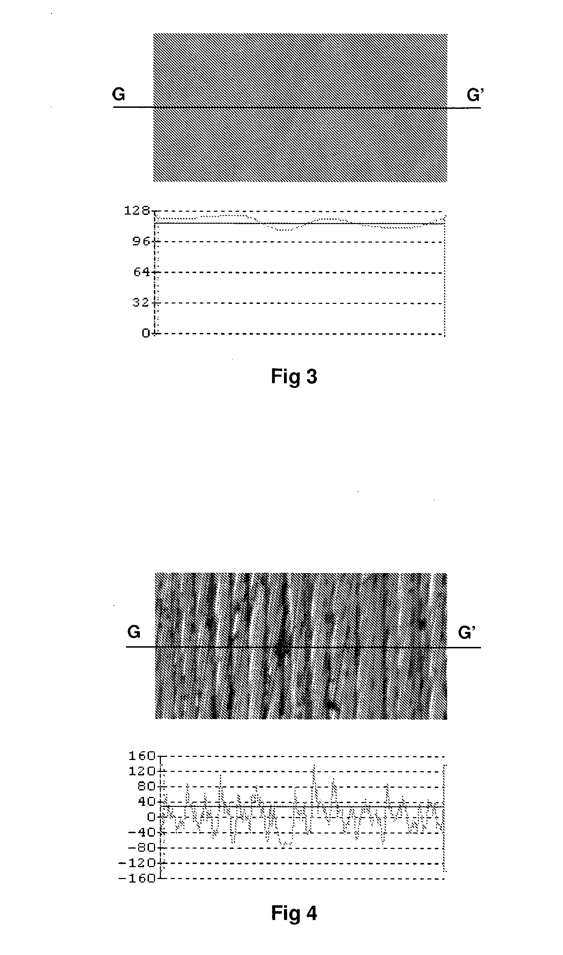

A cet effet, on attribue à chaque pixel de l'image la moyenne du niveau de gris des pixels environnants (voir figure 3) et on soustrait cette valeur de la valeur du niveau de gris de l'image brute du pixel d'origine. L'image résultante de cette première étape de traitement de l'image est illustrée à la figure 4.

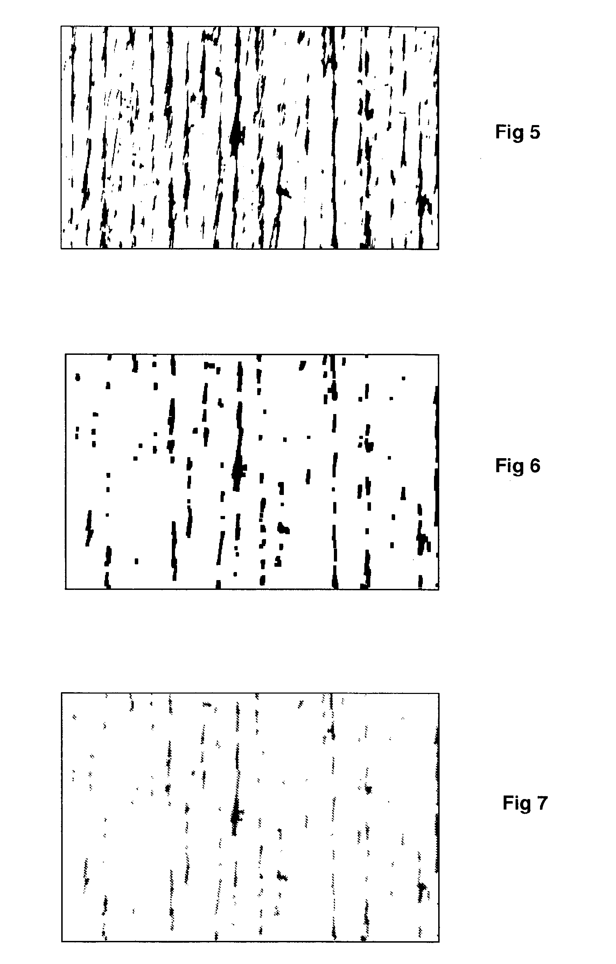

L'étape suivante, consiste à segmenter l'image mise à plat résultante de l'étape précédente, de manière à obtenir une image en noir et blanc telle que représentée à la figure 5, dans laquelle les pixels ayant un valeur de gris au dessus d'une valeur de seuil ont une couleur blanche, la couleur noire étant affectée aux pixels dont la valeur de gris est inférieure à ce seuil.

La valeur du seuil est calculée en fonction de la dispersion des valeurs de gris de l'image mise à plat résultant de la première étape.

L'étape qui suit consiste à effectuer une série de traitements dits morphologiques, de manière à distinguer les formes généralement allongées, assimilées à des ombres, des autres formes moins dilatées dans une direction préférentielle, et qui vont être assimilées à des débordements.

Pour ce faire, on réalise un premier traitement de l'image en pratiquant une ouverture morphologique à l'aide d'un élément structurant de forme carrée dont la taille est déterminée expérimentalement en fonction de la résolution de l'image et de la taille des plus petits débordements que l'on souhaite mettre en évidence. Les algorithmes mathématiques permettant de réaliser cette opération sont décrits à titre d'exemple dans l'ouvrage de Jean Serra Image Analysis and Mathematical Morphology, Academin Press, Londres 1982. Cette opération a pour effet de supprimer les aspérités du contour des zones noires, et permet de séparer les zones plus compactes susceptibles de représenter des débordements des zones d'ombres plus ou moins marquées présentes entre les fils essentiellement. L'image obtenue à l'issu de ce traitement est représentée à la figure 6.

A ce premier traitement d'ouverture morphologique on peut ajouter une seconde transformation, dite transformation en distance, à l'issue de laquelle les objets fins ou allongés ainsi que les formes de petite taille sont identifiés. Pour ce faire on fait varier le niveau de gris depuis le contour vers l'intérieur des zones noires par incréments croissants allant vers le blanc au fur et à mesure que l'on pénètre vers l'intérieur de ladite zone.

Les zones de taille importante et s'étalant de manière identique dans toutes les directions (voir figure 7) vont avoir en leur centre une zone plus claire que les zones étroites ou de petite taille.

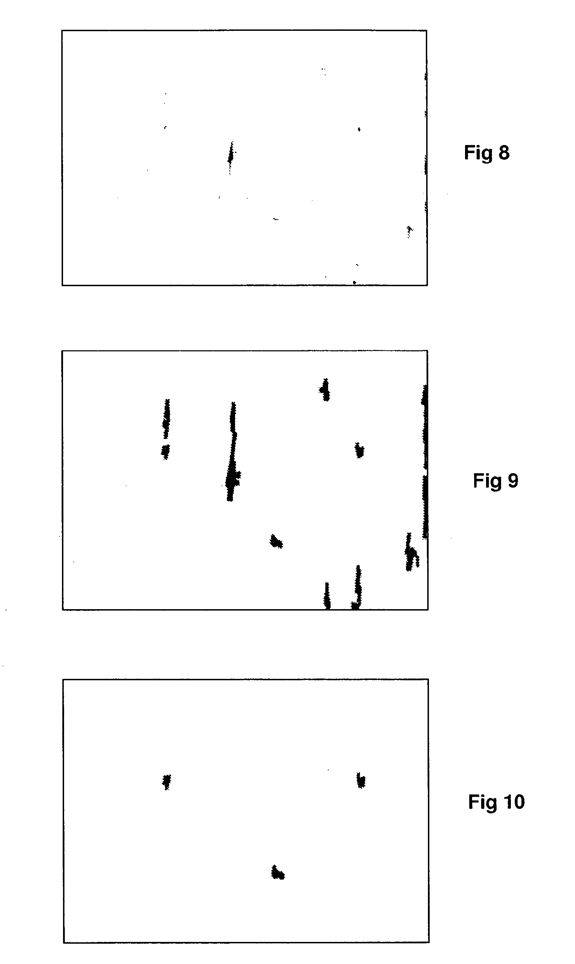

II suffit alors d'éliminer les zones ayant un niveau de gris minimum inférieur à un seuil donné pour identifier et sélectionner les zones de grande taille et faiblement allongées (voir figure 8). Ces zones sont alors reconstituées selon leur forme d'origine comme cela est représenté à la figure 9.

Le dernier traitement consiste à appliquer un critère de forme, en calculant, pour chacune des formes restantes, un ratio d'élongation qui est égal au rapport entre la longueur maxi et la largeur mini. En pratique ce seuil est supérieur ou égal à 2,2.

Les formes ayant un ratio supérieur à une valeur de seuil donnée sont identifiées comme étant des zones allongées, assimilables à des ombres, et sont éliminées.

Les formes restantes sont alors assimilées à des débordements, comme cela est illustré à la figure 10.

En se rapportant à l'image d'origine de la figure 2, on observe que trois des quatre débordements ont été identifiés par le logiciel de traitement d'image. Le débordement placé directement en contact avec une zone d'ombre a été éliminé à tord.

La dernière étape du traitement numérique consiste à appliquer une valeur d'évaluation à l'image obtenue en comptabilisant la surface et le nombre des débordements détectés, et en entrant ces valeurs dans un tableau d'évaluation préétabli.

En fonction de la grille d'évaluation on peut, au choix, déclencher une alarme, donner une indication chiffrée à l'opérateur chargé de régler les paramètres du processus de gommage et de retordage, ou encore déterminer, selon une grille de décision, la destination de la bobine de fil obtenue, pour laquelle une valeur d'évaluation finale peut être calculée en additionnant les valeurs d'évaluation calculées pour chacune des couches de fil enroulées sur le moyeu de la bobine.

## Revendications

1. Procédé de détection et d'évaluation des débordements (d) apparaissant sur des câbles sortant d'un processus de retordage et de gommage par traitement numérique de l'image d'une couche de câble formée par un ensemble de spires enroulées autour du moyeu d'une bobine (4) et étant éclairée par une source d'éclairage, le procédé comprenant les étapes au cours desquelles :
A à l'aide d'une caméra linéaire (1), on saisit l'image numérique brute de la
surface de la couche de câble sur un tour complet de la bobine,
B on procède à la mise à plat de l'image brute en attribuant à chaque pixel de l'image la moyenne du niveau de gris des pixels environnants et en soustrayant cette valeur de la valeur du niveau de gris de l'image brute du pixel d'origine de manière à limiter l'influence des variations d'éclairage et de la brillance des spires,
C on segmente l'image mise à plat pour faire apparaître les zones sombres contenant des zones de débordement,
D on traite l'image segmentée à l'aide d'une série de traitements morphologiques pour séparer et sélectionner les formes susceptibles de représenter des débordements, des zones susceptibles de représenter des ombres,
E on attribue une valeur d'évaluation à l'image finale obtenue, et on compare la valeur d'évaluation à une valeur de seuil.

2. Procédé selon la revendication 1 dans lequel le traitement de l'image opéré à l'étape D comprend une ouverture morphologique à l'aide d'un élément structurant de forme carrée qui permet de séparer les zones plus compactes susceptibles de représenter des débordements (d) des zones d'ombres présentes entre les spires.

3. Procédé selon la revendication 1 dans lequel le traitement de l'image opéré à l'étape D comprend une transformation en distance permettant d'identifier les objets fins et de petite taille.

4. Procédé selon la revendication 1 dans lequel les zones susceptibles de représenter des ombres sont assimilées à des zones longues et étroites, dont le facteur de forme, égal au rapport entre la longueur maximum et la largeur minimum, est supérieur à un seuil donné.

5. Procédé selon la revendication 4 dans lequel le facteur de forme est supérieur ou égal à 2,2.

## Patentansprüche

1. Verfahren zur Erfassung und Bewertung der Überstände (d), die bei Kabeln auftreten, welche aus einem Prozess des Zwirnens und Gummierens hervorgehen, durch digitale Verarbeitung des Bilds einer Kabelschicht, die von einer Einheit von um den Kern einer Spule (4) gewickelten Windungen geformt und von einer Leuchtquelle beleuchtet wird, wobei das Verfahren die Schritte enthält, während denen:
A mit Hilfe einer linearen Kamera (1) das
digitale Rohbild der Oberfläche der Kabelschicht über eine ganze Umdrehung der Spule erfasst wird,
B das Rohbild verflacht wird, indem jedem Pixel
des Bilds der Mittelwert des Graupegels der umgebenden Pixel zugeteilt wird, und indem dieser Wert vom Wert des Graupegels des Rohbilds des Ursprungspixels subtrahiert wird, um den Einfluss der Beleuchtungsschwankungen und der Helligkeit der Windungen zu begrenzen,
C das verflachte Bild segmentiert wird, um die
Überstandzonen enthaltenden dunklen Zonen sichtbar zu machen,
D das segmentierte Bild mit Hilfe einer Reihe von
morphologischen Verarbeitungen verarbeitet wird, um die Formen, die möglicherweise Überstände darstellen, von den Zonen zu trennen und auszuwählen, die möglicherweise Schatten darstellen,
E dem erhaltenen endgültigen Bild ein
Bewertungswert zugeteilt wird und der Bewertungswert mit einem Schwellwert verglichen wird.

2. Verfahren nach Anspruch 1, bei dem die im Schritt D durchgeführte Verarbeitung des Bilds eine morphologische Öffnung mit Hilfe eines strukturierenden Elements quadratischer Form enthält, die es ermöglicht, die kompakteren Zonen, die möglicherweise Überstände (d) darstellen, von den zwischen den Windungen vorhandenen Schattenzonen zu trennen.

3. Verfahren nach Anspruch 1, bei dem die im Schritt D durchgeführte Verarbeitung des Bilds eine Abstandsumwandlung enthält, die es ermöglicht, die feinen und kleinen Gegenstände zu erkennen.

4. Verfahren nach Anspruch 1, bei dem die Zonen, die möglicherweise Schatten darstellen, langen und schmalen Zonen gleichgesetzt werden, deren Formfaktor, gleich dem Verhältnis zwischen der größten Länge und der kleinsten Breite, größer als eine gegebene Schwelle ist.

5. Verfahren nach Anspruch 4, bei dem der Formfaktor größer als oder gleich 2,2 ist.

## Claims

1. Method for detecting and evaluating the protrusions (d) that appear on cords coming from a twisting/rubberizing process, by the digital processing of the image of a layer of cord formed by a number of turns wound around the core of a spool (4) and being lightened by a light source, wherein the method comprises the steps during which:
A) the raw digital image of the surface of the layer of cord over one complete revolution of the spool is taken using a linear camera (1);
B) the raw image is displayed flat by assigning to each pixel of the image the average of the grey level of the surrounding pixels and substracting this value from the grey level of the raw image of the original pixel so as to limit the influence of the variations in lighting and in the brightness of the turns;
C) the flattened image is segmented so as to reveal the dark areas that contain protrusion areas;
D) the segmented image is a processed using a series of morphological processing operations in order to separate and select the shapes likely to represent protrusions and areas likely to represent shadows; and
E) an evaluation value is assigned to the final image obtained and the evaluation value is compared with a threshold value.

2. Process according to Claim 1, in which the image processing carried out in step D comprises a morphological opening operation using a structuring element of square shape allowing to separate the most compact areas likely to represent protrusions (d) of the shadow areas present between the turns.

3. Method according to Claim 1, in which the image processing carried out in step D comprises a distance transformation operation for identifying the fine objects and those of small size.

4. Method according to Claim 1, in which the areas likely to represent shadows are revealed as long narrow areas, the aspect ratio of which, equal to the ratio of the maximum length to the minimum width, is higher than a given threshold.

5. Method according to Claim 4, in which the aspect ratio is equal to 2.2 or higher.
